# FASCICULE DE BREVET EUROPEEN

(11) **EP 2 363 382 B1**
(45) Date de publication et mention de la délivrance du brevet: **01.01.2014**
(21) Numéro de dépôt: 11370001.7
(22) Date de dépôt: 07.01.2011
(51) Int. Cl.: C03B 23/025, C03B 23/03, C03B 35/18, B22F 3/00, C03B 40/00, C03B 35/20

(54) **Procédé dans lequel on réalise au moins une opération sur du verre chaud reposant sur un support.**
Verfahren, bei dem mindestens eine Operation auf heißem Glas auf einer Halterung ausgeführt wird
Method in which at least one operation is executed on hot glass resting on a support.

(30) Priorité: 08.01.2010 FR 1000069
(43) Date de publication de la demande: 07.09.2011
(73) Titulaire: Tibtech Innovations Société à Responsabilité Limitée, 59910 Bondues (FR)
(72) Inventeur: Tiberghien, Guillaume, 59910 Bondues (FR)
(74) Mandataire: Boubal, Denis Henri Jacques

(56) Documents cités:
- EP-A1- 0 312 439
- EP-A1- 1 043 277
- WO-A1-97/08108
- BE-A3- 1 006 833

## Description

L'invention est relative à un procédé dans lequel on réalise au moins une opération sur du verre chaud, le verre chaud reposant sur un support, et dans lequel on utilise un revêtement constitué essentiellement de fibres thermostables intercalé entre le support et le verre chaud, ladite opération sur le verre pouvant provoquer un déplacement relatif entre le verre et ledit revêtement.

L'invention concerne également un revêtement, résistant à la température, convenant pour la mise en oeuvre du procédé.

Par « chaud », on entend des températures permettant le ramollissement du verre, comprises entre 600 à 700°C, mais l'invention n'est pas limitée à des utilisations à des températures aussi élevées.

Le domaine de l'invention est celui de l'élaboration et du traitement de plaques de verre.

Dans ce domaine, on connaît des documents EP-0.312.439 et EP-0.972.751 des revêtements résistant à haute température, destinés à être intercalés entre un support, notamment un outillage, et du verre chaud.

Ce type de revêtement est constitué d'un textile obtenu à partir au moins de fibres thermostables, généralement métalliques et trouve une application particulière lors de la mise en oeuvre d'un procédé de bombage sur squelette.

Lors de ce procédé, la feuille de verre chaud, préalablement découpée à la forme convenable, est posée par ses extrémités sur un squelette constitué d'un cadre métallique, dont la forme correspond à celle du pourtour de l'objet à obtenir. Le bombage du verre intervient sous l'action de la pesanteur, voire sous l'action d'une presse. Ce procédé est généralement utilisé pour fabriquer pare-brise et lunettes automobiles.

Ce type de revêtement présente généralement une mauvaise conductivité thermique et est pourvu de jours afin de faciliter la trempe du verre par soufflage d'air au travers dudit revêtement et du squelette. Il a pour principale fonction d'assurer un contact homogène et sans pression excessive entre le verre et le revêtement dans le but de respecter l'intégrité de surface du verre en contact avec ledit revêtement.

L'inventeur a toutefois constaté, lors de ces opérations de formage sur squelette, qu'il se produisait un déplacement relatif entre le verre et le revêtement textile susceptible de rayer/marquer le verre. Or, les revêtements des documents EP-0.312.439 et EP-0.972.751 ne prennent pas en compte l'existence de ce déplacement et sont donc susceptibles de rayer/marquer le verre, lors d'un tel déplacement.

La présente invention a pour but de pallier les inconvénients précités en proposant un revêtement convenant pour la mise en oeuvre d'un procédé dans lequel on réalise au moins une opération sur du verre chaud, telle qu'une opération de formage, et dans lequel on s'assure que le déplacement possible relatif entre le revêtement textile et le verre, provoqué par ladite opération, ne détériore pas l'intégrité de l'état de surface du verre en contact avec le revêtement.

D'autres buts et avantages apparaîtront au cours de la description qui va suivre qui n'est donnée qu'à titre indicatif et qui n'a pas pour but de la limiter.

L'invention concerne un revêtement résistant à la température destiné à être intercalé entre un support et du verre chaud constitué essentiellement d'un tissu de fibres thermostables, présentant des lignes de support.

Selon l'invention, lesdites lignes de support s'étendent de manière parallèle entre elles, au moins sur une partie centrale du tissu destinée à supporter le verre, selon une première direction dudit tissu, des fils de liaison dudit tissu, dirigés notamment orthogonalement auxdites lignes de support, selon une deuxième direction, assurant la liaison desdites lignes de support entre elles,
lesdites lignes de support peuvent être constituées, soit par plusieurs éléments longilignes distincts dudit tissu, soit par au moins un élément longiligne continu dudit tissu s'étendant périodiquement suivant ladite deuxième direction, selon la première direction pour constituer lesdites lignes de support.

Selon l'invention, le diamètre des lignes de support est supérieur au diamètre des fils de liaison compris entre 2 fois et 50 fois le diamètre des fils de liaison, les fils de liaison étant situés en retrait par rapport à la surface du tissu destinée à être en contact avec le verre de telle façon à ne pas constituer des lignes de contact pour le verre.

Selon des caractéristiques optionnelles du revêtement :
- le diamètre des lignes de support est supérieur au diamètre des fils de liaison compris entre 5 fois et 50 fois le diamètre des fils de liaison ;
- le ou chaque élément longiligne est lui-même un fil, un câblé ou un toron,
- le ou chaque élément longiligne est une mèche de fils;
- ledit ou chaque élément longiligne est un tricot élastique tel que par exemple tricotine tubulaire, conférant audit tissu une élasticité selon la première direction dudit tissu ;
- le ou chaque élément longiligne est une tresse de fils;
- lesdites lignes de support sont jointives, ou alternativement, le tissu présente des jours rectangulaires entre les fils de chaîne et lesdites lignes de support dont les dimensions sont comprises entre 1mm et 50 mm ;
- le tissu présente au moins deux éléments longilignes s'étendant en parallèle dans le même plan du tissu afin d'augmenter la surface du support dudit tissu, ou encore de manière superposée, afin d'augmenter l'épaisseur dudit tissu,
- le tissu est sous la forme d'une bande, lesdites lignes de support orientées orthogonalement à l'axe longitudinal de la bande, ou alternativement, le tissu est sous la forme d'une bande, lesdites lignes de support orientées parallèlement à l'axe longitudinal de la bande ;
- lesdites lignes de support successives formées par un même élément longiligne sont attenantes au niveau de deux bords dudit tissu via des coudes dudit élément longiligne ;
- lesdites fibres thermostables sont métalliques, exclusivement, ou encore en mélange avec des fibres synthétiques, telles que par exemple PBO ou aramide, ou encore en mélange avec des fibres minérales telles que verre, verre E, silice ou basalte.

L'invention concerne également un procédé dans lequel on réalise au moins une opération sur du verre chaud, et dans lequel on utilise un revêtement, conforme à l'invention, constitué essentiellement de fibres thermostables, intercalé entre le support et le verre chaud, ladite opération pouvant provoquer un déplacement relatif entre le verre et le revêtement.

Selon l'invention, le revêtement présente lesdites lignes de support, et on oriente les directions desdites lignes de support localement, selon la direction du déplacement du verre par rapport au revêtement lors de la réalisation de ladite opération.

L'invention sera mieux comprise à la lecture de la description suivante accompagnée des dessins en annexe parmi lesquels :
- la figure 1 est une vue de dessus d'un outillage, plus particulièrement squelette formé d'un cadre métallique utilisé pour le formage du verre chaud sur lequel est prévu un revêtement conforme à l'invention et sur lequel repose, partiellement dessinée, une plaque de verre,
- la figure 1a est une vue de détail de la mise en oeuvre du revêtement au niveau des angles du cadre support tel qu'illustré à la figure 1,
- la figure 2 est une vue selon la coupe I-I telle qu'illustrée à la figure 1,
- la figure 3 est une vue d'une section de longueur du revêtement, tel qu'illustré à la figure 2, dans une position à plat,
- la figure 4 est une vue selon la coupe II-II telle qu'illustrée à la figure 1,
- la figure 5 est une vue d'un revêtement conforme à l'invention, selon un second mode de réalisation, le support étant réalisé au moyen de mèches de fils,
- la figure 6 est une vue d'un revêtement conforme à l'invention, selon un troisième mode de réalisation.

Aussi, l'invention concerne un procédé dans lequel on réalise au moins une opération sur du verre chaud et dans lequel le verre chaud repose sur un support 1, on utilise un revêtement 2, constitué essentiellement de fibres thermostables, qui est intercalé entre le support 1 et le verre chaud V, ladite opération pouvant provoquer un déplacement relatif entre le verre chaud (V) et le revêtement.

Selon le procédé, le revêtement présente des lignes de support 3, les directions desdites lignes de support 3 étant orientées localement selon la direction de déplacement D du verre par rapport audit revêtement 2 lors de la réalisation de ladite opération.

Orienter la direction des lignes de support selon la direction locale du déplacement entre le verre et le revêtement permet avantageusement d'éviter, ou à tout le moins de grandement limiter le fait que ce déplacement relatif provoque la rayure/marquage du verre.

Selon un mode de réalisation, ladite opération est une opération de formage, notamment de bombage, voire de trempe, du verre chaud. Le support est un cadre formé de longerons 4 et de traverses 5, lesdites lignes de support 3 du revêtement 2 étant alors orientées orthogonalement auxdits longerons 4 et auxdites traverses 5 du cadre du support 1.

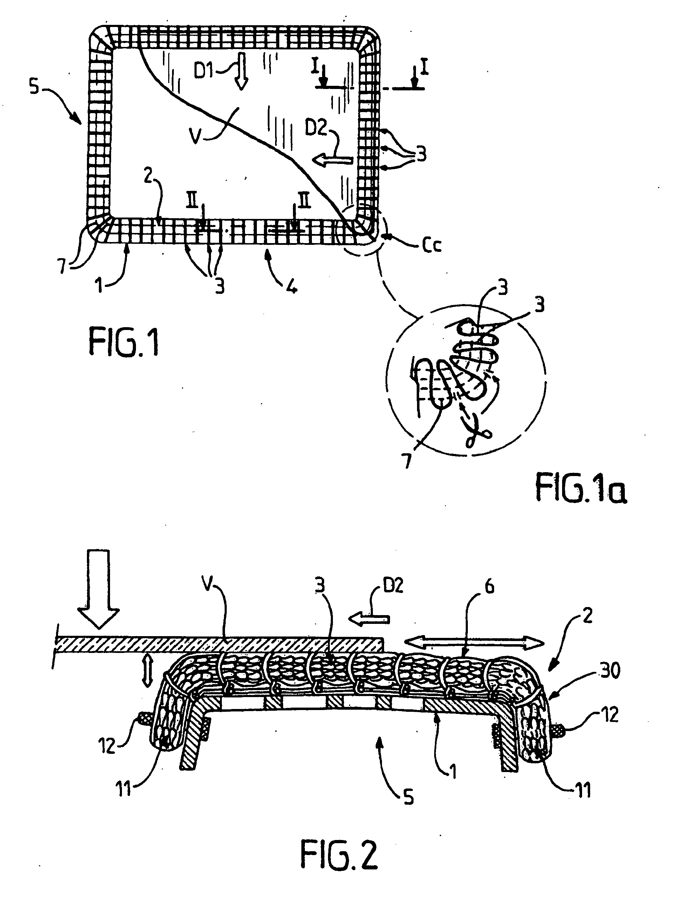

En effet, il a été constaté que lorsque la plaque de verre V repose sur son pourtour sur le cadre, tel qu'illustré à la figure 1, le verre a tendance, lors du formage (sous l'effet de la gravité, voire d'une presse), à se déplacer localement orthogonalement aux longerons 4, selon la direction D1 tel qu'illustré à la figure 1, et localement orthogonalement aux traverses 5 du cadre telles qu'illustrées selon la direction D2 à la figure 1 ou encore à la figure 2.

Selon l'invention, le revêtement peut être constitué par au moins un tissu 6 à partir desdites fibres thermostables, lesdites lignes de support 3 s'étendant de manière parallèle, au moins sur une partie centrale du revêtement 2 destinée à supporter le verre selon une première direction d1 dudit tissu. Des fils de liaison 7 dudit tissu 6, par exemple dirigés orthogonalement auxdites lignes de support 3, selon une deuxième direction d2 dudit tissu, assurent la liaison et le maintien desdites lignes de support 3 entre elles.

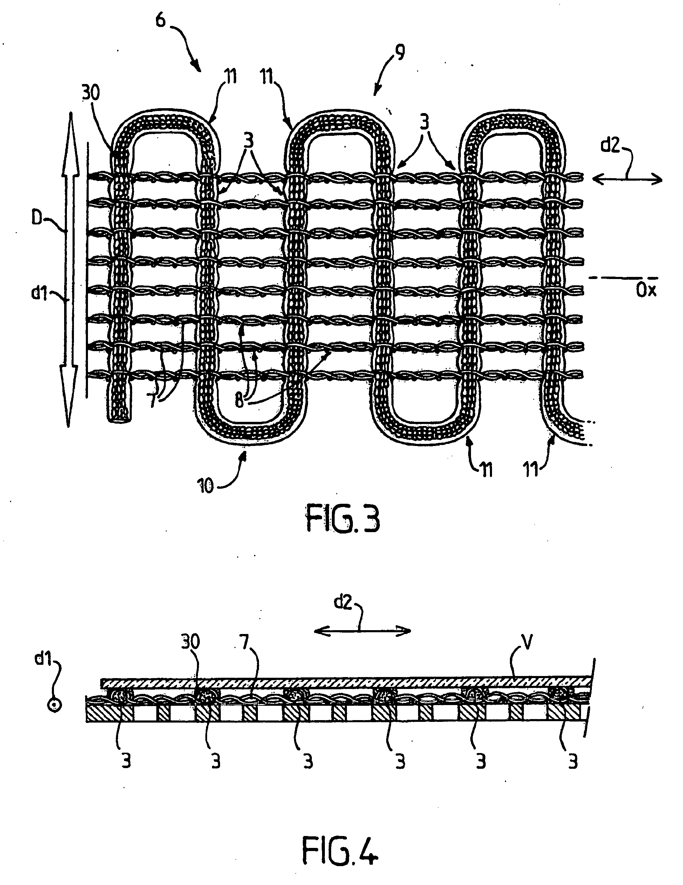

Selon l'invention, et telles qu'illustrées selon la vue de la figure 4, les lignes de support 3 du tissu ont pour fonction de supporter le verre V alors que les fils de liaison 7, situés en retrait par rapport à la surface du tissu destiné à être en contact avec le verre, ont pour fonction d'assurer le maintien et la liaison des lignes de support entre elles, mais en aucun cas de constituer des lignes de contact pour le verre, telles qu'illustrées à la figure 4.

A cet effet, les lignes de support 3 sont de diamètre supérieur au diamètre des fils de liaison 7. Par exemple, le diamètre des lignes de support 3 est compris entre 2 fois et 50 fois le diamètre des fils de liaison 7, voire entre 5 fois et 50 fois le diamètre des fils de liaison 7.

Notamment tels qu'illustrés à la figure 4, les fils de liaison 7 sont situés en majorité sur la surface du tissu 7 en contact avec le support.

Tels qu'illustrés, selon les exemples des figures, les fils de liaison 7 s'étendent selon la direction d2, orthogonalement à la direction d1, pour assurer le maintien des lignes de support 3 entre elles.

Toutefois, l'invention n'est pas limitée à ce mode de réalisation, lesdits fils de liaison 7 pouvant s'étendre en biais par rapport à la direction d1 des lignes de support 3, par exemple à 45°.

Il est par ailleurs à noter que les lignes de support 3 peuvent être des lignes droites, selon la direction d1, ou encore présentant une légère ondulation.

Selon l'invention, lesdites lignes de support 3 peuvent être constituées soit par plusieurs éléments longilignes distincts du tissu (non illustrés), soit par au moins un élément longiligne continu 30 ; 31 ; 32 ; 33 dudit tissu 6 s'étendant périodiquement suivant ladite deuxième direction d2 dudit tissu, selon ladite première direction d1 pour constituer lesdites lignes de support 3.

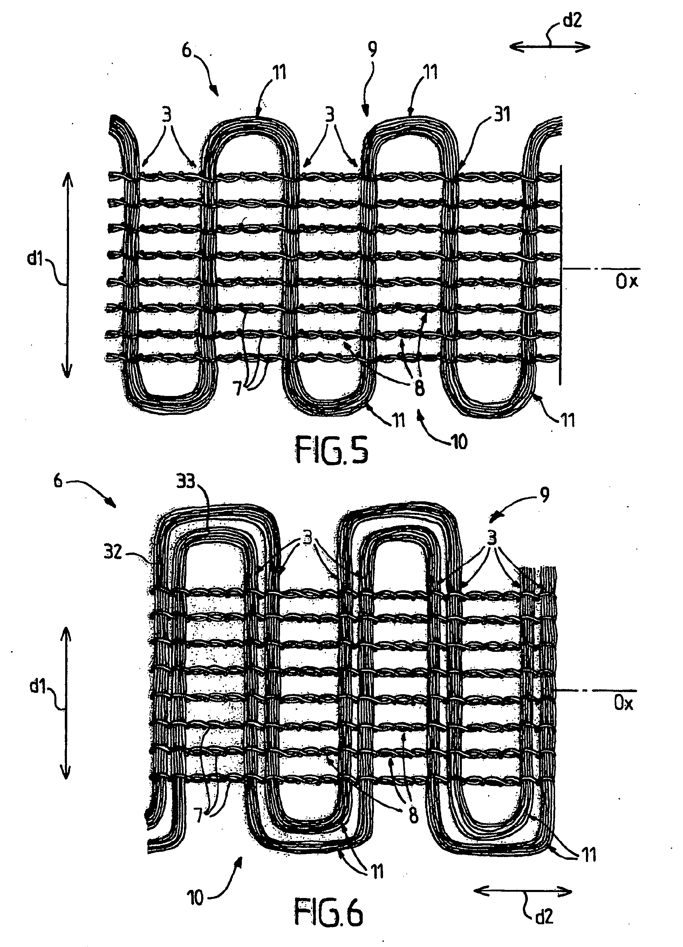

Selon un mode de réalisation notamment illustré aux figures 5 et 6, le ou chaque élément longiligne est une mèche de fils 31 ; 32, 33.

Selon un autre mode de réalisation illustré des figures 2 à 4, le ou chaque élément longiligne est un tricot élastique 30 conférant audit tissu une élasticité selon ladite première direction. Comme illustré sur les exemples des figures 2 à 4, il s'agit notamment d'une tricotine tubulaire qui peut éventuellement être vide ou encore garnie, par exemple de fibres craquées, afin d'augmenter le moelleux dudit élément longiligne sur son épaisseur, sans toutefois altérer l'élasticité du tissu.

Selon un mode de réalisation non illustré, ledit ou chaque élément longiligne peut être une tresse de fils.

Selon un mode de réalisation, les lignes de support 3 successives peuvent être jointives (non illustrées). Alternativement le tissu 6 peut présenter des jours 8 rectangulaires entre les fils de liaison 7 et lesdites lignes de support 3 dont les dimensions des côtés sont comprises entre 1 mm et 50 mm notamment entre 10 et 30 mm. Ces jours peuvent permettre de faciliter la trempe du verre, par exemple, par soufflage d'air froid. Dans ce cas, le support, notamment le cadre support peut être ajouré.

Tel qu'illustré selon le mode de réalisation de la figure 6, le tissu 6 peut présenter au moins deux éléments longilignes 32, 33 s'étendant en parallèle, dans un même plan du tissu 6 afin d'augmenter la surface de support dudit tissu. Alternativement (non illustrés), lesdits au moins deux éléments longilignes s'étendant en parallèle peuvent être superposés afin d'augmenter l'épaisseur dudit tissu, notamment dans le cas de plaques de verre de poids élevé.

Tel qu'illustré selon les exemples des figures, dans le cas d'un support cadre, le tissu 6 peut être sous la forme d'une bande s'étendant le long des longerons 4 et des traverses 5 du cadre support 1. Tel qu'illustré à la figure 1, lesdites lignes de support 3 sont orientées orthogonalement à l'axe longitudinal de la bande.

Tel qu'illustré selon la figure 1a de détail, afin de faciliter la mise en place de la bande au niveau des coins Cc du cadre support, il est possible de sectionner le ou les fils de liaison 7, extérieurs, permettant ainsi de faire prendre à la bande un rayon de courbure serré, tel qu'illustré selon l'exemple des figures 3 à 6.

Lesdites lignes de support peuvent être constituées par au moins un élément longiligne continu 30 ; 31 ; 32 ; 33 s'étendant périodiquement selon ladite deuxième direction d2, selon la première direction d1 pour constituer lesdites lignes de support 3, lesdites lignes successives appartenant au même élément longiligne 30 ; 31 ; 32, 33 étant attenantes, au niveau de deux bords 9, 10 du tissu via des coudes 11 dudit élément longiligne 30 ; 31 ; 32, 33.

Avantageusement, ces coudes 11 sont utilisés, tels qu'illustrés à la figure 2 pour fixer en tension le revêtement sur le cadre support en crochetant les coudes 11 sur des ergots 12 dudit cadre. Les ergots sont positionnés le long des longerons 4 des traverses 5 du cadre support, en retrait de la surface supérieure d'appui dudit cadre, en contact avec le revêtement 2.

Une fois un tel revêtement positionné sur les ergots, le revêtement tel qu'illustré à la figure 2 offrira une surface de contact pour le verre constituée uniquement des lignes de support 3, parallèles entre elles, les coudes 11 dudit élément longiligne étant situés en retrait, ne rentrant pas en contact avec le verre.

Avantageusement, les fibres thermostables peuvent être métalliques exclusivement ou encore mélangées avec des fibres synthétiques telles que par exemple PBO ou aramide, ou encore en mélange avec des fibres minérales telles que verre, verre E, silice ou basalte.

Selon un mode de réalisation, l'opération est une opération de transport du verre chaud par un convoyeur. Le support est constitué par le convoyeur, les lignes de support orientées selon le sens de déplacement du convoyeur. Par exemple, le convoyeur peut être un convoyeur à bande.

L'invention concerne également un revêtement 2 résistant à la température destiné à être intercalé entre un support 1 et du verre chaud V convenant notamment pour la mise en oeuvre du procédé.

Ce revêtement 2 est constitué essentiellement d'un tissu 6 de fibres thermostables présentant des lignes de support.

Selon l'invention, lesdites lignes de support 3 s'étendent de manière parallèle entre elles, au moins sur une partie centrale du tissu 6 destinée à supporter le verre, selon une première direction d1 dudit tissu, des fils de liaison dudit tissu, notamment dirigés orthogonalement auxdites lignes de support 3, selon une deuxième direction d2, assurant la liaison et le maintien desdites lignes de support 3 entre elles.

Les fils de liaison 7 peuvent être dirigés en biais par rapport à la direction d1 des lignes de support, par exemple à 45°.

Telles que déjà développées, les lignes de support 3 ont pour fonction de supporter le verre, contrairement aux fils de liaison 7 qui sont destinés, tels qu'illustrés à la figure 3, à être en retrait par rapport à la surface de contact du tissu avec le verre. A cet effet, l'épaisseur (ou diamètre) des fils de liaison 7 est inférieure à l'épaisseur des lignes de support 3 afin de garantir ce résultat. Par exemple, le diamètre des lignes de support 3 peut être compris entre 2 fois et 50 fois le diamètre des fils de liaison 7, voire entre 3 fois et 50 fois le diamètre des fils de liaison, voire entre 5 fois et 50 fois le diamètre des fils de liaison 7.

Lesdites lignes de support 3 peuvent être constituées soit par plusieurs éléments longilignes distincts du tissu 6 (non illustrés), soit par au moins un élément longiligne continu 30 ; 31 ; 32, 33 dudit tissu s'étendant, périodiquement suivant ladite deuxième direction d2, selon la première direction d1 pour constituer lesdites lignes de support 3.

Dans ce dernier cas, le tissu 6 présente au moins un élément longiligne s'étendant périodiquement suivant la deuxième direction d2, selon la première direction d1 pour constituer lesdites lignes de support. Lesdites lignes de support successives, formées par un même élément longiligne 30 ; 31 ; 32, 33 sont alors attenantes au niveau de deux bords 9, 10 dudit tissu via des coudes 11 dudit élément longiligne.

Ces coudes 11 non orientés suivant la direction d1 des lignes de support 3 ne sont, de préférence, pas utilisés pour supporter le verre, mais peuvent être, le cas échéant utilisés pour fixer le tissu sur des ergots d'un support en crochetant lesdits coudes. Le cas échéant ces coudes 11 seront sectionnés, lesdites lignes 3 de support sont alors constituées par des éléments longilignes distincts.

Tels que déjà développés et illustrés à la figure 4, les fils de liaison 7 sont situés en majorité sur l'une des faces du tissu destinée à être en contact avec le support.

Il est à noter que les lignes de support 3 peuvent être des lignes droites selon la direction d1 ou encore présentant une légère ondulation.

Le ou chaque élément longiligne peut être une mèche de fils 31 ; 32 ; 33 ou encore un tricot élastique 30 tel que par exemple tricotine tubulaire conférant au tissu une élasticité selon la première direction d1 dudit tissu.

Dans le cas d'un tricot tubulaire, ce tricot peut être de section creuse (vide), ou au contraire, garni par exemple à l'aide de fils craqués, ou de rubans de fibres, de telle façon à ne pas limiter l'élasticité dudit tricot élastique.

Selon un autre mode de réalisation non illustré, le ou chaque élément longiligne peut être une tresse de fils.

Selon un mode de réalisation non illustré, lesdites lignes de support peuvent être jointives. Alternativement, le tissu peut présenter des jours rectangulaires 8 entre les fils de chaîne 7 et les fils de support 3 dont les dimensions des côtés sont comprises entre 1 mm et 50 mm, tel que notamment entre 10 mm et 30 mm.

Tel qu'illustré à la figure 6, le tissu 6 peut présenter au moins deux éléments longilignes 32 ; 33 s'étendant en parallèle dans le même plan dudit tissu afin d'augmenter la surface du support de tissu, ou encore de manière superposée (non illustrée) afin d'augmenter l'épaisseur dudit tissu notamment dans le cas de support de verre lourd.

Tel qu'illustré selon les exemples des figures 3 à 6, le tissu 6 est sous la forme d'une bande, lesdites lignes de support 3 orientées orthogonalement à l'axe longitudinal de la bande.

Alternativement, selon un autre mode de réalisation non illustré, le tissu 6 est sous la forme d'une bande, lesdites lignes de support 3 orientées parallèlement à l'axe longitudinal de la bande.

Les fibres thermostables peuvent être métalliques, exclusivement ou encore en mélange avec des fibres synthétiques telles que par exemple PBO ou aramide, ou encore en mélange avec des fibres minérales telles que verre, verre E, silice, basalte.

Nous décrivons maintenant deux exemples, non limitatifs :
EXEMPLE 1 : Les caractéristiques du tissu sont les suivantes :
   - deux éléments longilignes, jointifs, constituent lesdites lignes de support, chacun constitué d'une tricotine,
   - diamètre des lignes de support : 3,5 mm
   - diamètre des fils de liaison : 0,5 mm,
   - écartement entre les fils de liaison : 5,8 mm,
   - écartement entre les lignes de support : 4,5 mm.
EXEMPLE 2 : Les caractéristiques du tissu sont les suivantes :
   - un élément longiligne constitue les lignes de support, constitué par une tricotine pleine,
   - diamètre des lignes de support : 5,5 mm,
   - diamètre des fils de liaison : 0,4 mm,
   - écartement entre les fils de liaison : 5,8 mm,
   - écartement entre les lignes de support : 13 mm.

Bien que le revêtement convient plus particulièrement pour le support du verre chaud, il pourrait également être utilisé pour toute matière ou métal susceptible de se déformer à température.

Naturellement, d'autres modes de réalisation auraient pu être envisagés sans pour autant sortir du cadre de l'invention définie par les revendications ci-après.

## Revendications

1. Revêtement (2) résistant à la température destiné à être intercalé entre un support (1) et du verre chaud (V) constitué essentiellement d'un tissu (6) de fibres thermostables, présentant des lignes de support lesdites lignes de support (3) s'étendent de manière parallèle entre elles, au moins sur une partie centrale du tissu (6) destinée à supporter le verre, selon une première direction (d1) dudit tissu, des fils de liaison (7) dudit tissu, dirigés notamment orthogonalement auxdites lignes de support (3), selon une deuxième direction (d2), assurant la liaison et le maintien desdites lignes de support (3) entre elles,
**caractérisé en ce que** lesdites lignes de support (3) sont constituées soit par plusieurs éléments longilignes distincts du tissu, soit par au moins un élément longiligne continu (30 ; 31 ; 32, 33) dudit tissu (6) s'étendant, périodiquement suivant ladite deuxième direction (d2), selon la première direction (d1) pour constituer lesdites lignes de support (3),
le diamètre des lignes de support (3) étant supérieur au diamètre des fils de liaison (7) compris entre 2 fois et 50 fois le diamètre des fils de liaison (7), lesdits fils de liaison (7) étant situés en retrait par rapport à la surface du tissu destinée à être en contact avec le verre de telle façon à ne pas constituer des lignes de contact pour le verre.

2. Revêtement selon la revendication 1, dans lequel le diamètre des lignes de support (3) est supérieur au diamètre des fils de liaison (7), compris entre 5 fois et 50 fois le diamètre des fils de liaison (7).

3. Revêtement selon la revendication 1 ou 2, dans lequel lesdites lignes de support (3) sont constituées par ledit moins un élément longiligne continu (30 ; 31 ; 32, 33) dudit tissu (6) s'étendant, périodiquement suivant ladite deuxième direction (d2), selon la première direction (d1) pour constituer lesdites lignes de support (3) et dans lequel lesdites lignes de support successives formées par un même élément longiligne (30 ; 31 ; 32, 33) sont attenantes au niveau de deux bords (9, 10) du tissu (6) via des coudes (11) dudit élément longiligne.

4. Revêtement selon l'une des revendications 1 à 3, dans lequel ledit ou chaque élément longiligne est une mèche de fils (31 ; 32, 33).

5. Revêtement selon l'une des revendications 1 à 3, dans lequel ledit ou chaque élément longiligne est un tricot élastique (30) tel que par exemple tricotine tubulaire conférant au tissu une élasticité selon la première direction (d1) dudit tissu (6).

6. Revêtement selon l'une des revendications 1 à 3, dans lequel ledit ou chaque élément longiligne est une tresse de fils.

7. Revêtement selon l'une des revendications 1 à 3, dans lequel ledit ou chaque élément longiligne est un câblé ou un toron.

8. Revêtement selon l'une des revendications 1 à 7, dans lequel le tissu présente des jours rectangulaires (8) entre les fils de chaîne (7) et lesdites lignes de support (3) dont les dimensions des côtés sont comprises entre 1 mm et 50 mm, et de préférence entre 10 et 30 mm.

9. Revêtement selon la revendication 3, dans lequel ledit tissu présente au moins deux éléments longilignes (32, 33) s'étendant en parallèle dans le même plan dudit tissu afin d'augmenter la surface de support dudit tissu, ou encore de manière superposée, afin d'augmenter l'épaisseur dudit tissu.

10. Revêtement selon l'une des revendications 1 à 9, dans lequel le tissu (6) est sous la forme d'une bande lesdites lignes de support (3) orientées orthogonalement à l'axe longitudinal de ladite bande.

11. Revêtement selon l'une des revendications 1 à 9, dans lequel le tissu (6) est sous la forme d'une bande lesdites lignes de support (3) orientées parallèlement à l'axe longitudinal de ladite bande.

12. Procédé dans lequel on réalise au moins une opération sur du verre chaud, et dans lequel le verre chaud repose sur un support (1), et dans lequel on intercale un revêtement (2) selon l'une quelconque des revendications 1 à 11, constitué essentiellement de fibres thermostables, entre le support (1) et ledit verre chaud (V), ladite opération pouvant provoquer un déplacement relatif entre le verre chaud (V), le revêtement présentant lesdites lignes de support (3), et dans lequel on oriente les directions desdites lignes de support (3), localement, selon la direction de déplacement (D) du verre par rapport audit revêtement (2) lors de la réalisation de ladite opération.

13. Procédé selon la revendication 12, dans lequel ladite opération est une opération de formage et/ou trempe du verre chaud, dans lequel le support (1) est un cadre formé de longerons (4) et de traverses (5), et dans lequel on oriente lesdites lignes de support (3) dudit revêtement orthogonalement aux longerons (4) et aux traverses (5) dudit cadre support.

14. Procédé selon la revendication 12, dans lequel ladite opération est une opération de transport du verre chaud par un convoyeur, le support étant constitué par ledit convoyeur, et dans lequel on oriente lesdites lignes de support (3) dudit revêtement selon le sens de déplacement dudit convoyeur.

15. Procédé selon la revendication 13 dans lequel ledit tissu (6) est sous la forme d'une bande s'étendant le long des longerons (4) et des traverses (5) dudit cadre support (1), lesdites lignes de support (3) orientées orthogonalement à l'axe longitudinal de ladite bande, et dans lequel lesdites lignes de support (3) sont constituées par ledit au moins un élément longiligne continu (30 ; 31 ; 32, 33) s'étendant, périodiquement suivant ladite deuxième direction (d2), selon la première direction (d1) pour constituer lesdites lignes de support (3), lesdites lignes de support (3) successives appartenant au même élément longiligne (30 ; 31 ; 32, 33) étant attenantes, au niveau de deux bords (9,10) du tissu (6), via des coudes (11) dudit élément longiligne (30 ; 31 ; 32, 33), ladite bande (6) de tissu étant fixée en tension sur le cadre support (1) en crochetant lesdits coudes (11) sur des ergots (12) dudit cadre positionnés le long des longerons (4) et des traverses (5) du cadre support (1), en retrait de la surface supérieure d'appui dudit cadre.

## Patentansprüche

1. Temperaturbeständige Beschichtung (2), die dazu bestimmt ist, zwischen einen Träger (1) und heißes Glas (V) eingelegt zu werden, und im Wesentlichen aus einem Gewebe (6) aus thermostabilen Fasern gebildet wird und Trägerfäden aufweist, wobei die besagten Trägerfäden (3) zumindest in einem zentralen Abschnitt des Gewebes (6), der dazu bestimmt ist, das Glas zu tragen, jeweils parallel zueinander in eine erste Richtung (d1) des besagten Gewebes verlaufen, und Verbindungsfäden (7) des besagten Gewebes, die vor allem orthogonal zu den besagten Trägerfäden (3) in eine zweite Richtung (d2) verlaufen, für die Verbindung und den Halt der besagten Trägerfäden (3) zueinander sorgen, **dadurch gekennzeichnet, dass** die besagten Trägerfäden (3) entweder durch mehrere langgestreckte Elemente gebildet werden, die vom Gewebe getrennt sind, oder durch zumindest ein durchgehendes langgestrecktes Element (30; 31; 32; 33) des besagten Gewebes (6), das sich periodisch nach der besagten zweiten Richtung (d2) in die erste Richtung (d1) erstreckt, um die besagten Trägerfäden (3) zu bilden, wobei der Durchmesser der Trägerfäden (3) größer als der Durchmesser der Verbindungsfäden (7) ist, zwischen 2 und 50 Mal größer als der Durchmesser der Verbindungsfäden (7), und die besagten Verbindungsfäden (7) im Verhältnis zur Gewebeoberfläche, die dazu bestimmt ist, mit dem Glas in Kontakt zu treten, zurückversetzt sind, um keine Kontaktfäden für das Glas zu bilden.

2. Beschichtung nach Anspruch 1, bei der der Durchmesser der Trägerfäden (3) größer als der Durchmesser der Verbindungsfäden (7) ist, zwischen 5 und 50 Mal größer als der Durchmesser der Verbindungsfäden (7).

3. Beschichtung nach Anspruch 1 oder 2, bei der die besagten Trägerfäden (3) durch das besagte zumindest eine langgestreckte Element (30; 31; 32; 33) des besagten Gewebes (6) gebildet werden, das sich periodisch nach der besagten zweiten Richtung (d2) in die erste Richtung (d1) erstreckt, um die besagten Trägerfäden (3) zu bilden, und bei der die besagten sukzessiven und durch dasselbe langgestreckte Element (30; 31; 32; 33) gebildeten Trägerfäden im Bereich von zwei Rändern (9, 10) des Gewebes (6) durch Biegungen (11) des besagten langgestreckten Elements angrenzend sind.

4. Beschichtung nach einem der Ansprüche 1 bis 3, bei der das besagte oder jedes langgestreckte Element eine Fadensträhne (31; 32; 33) ist.

5. Beschichtung nach einem der Ansprüche 1 bis 3, bei der das besagte oder jedes langgestreckte Element ein elastisches Gewirke (30), wie beispielsweise ein Schlauchgewirke ist, das dem Gewebe eine Elastizität in die erste Richtung (d1) des besagten Gewebes (6) verleiht.

6. Beschichtung nach einem der Ansprüche 1 bis 3, bei der das besagte oder jedes langgestreckte Element ein Fadengeflecht ist.

7. Beschichtung nach einem der Ansprüche 1 bis 3, bei der das besagte oder jedes langgestreckte Element ein Drahtmaterial oder ein Spinnfaden ist.

8. Beschichtung nach einem der Ansprüche 1 bis 7, bei der das Gewebe rechteckige Schlitze (8) zwischen den Kettenfäden (7) und den besagten Trägerfäden (3) aufweist, deren Seitenabmessungen zwischen 1 mm und 50 mm, vorzugsweise jedoch zwischen 10 und 30 mm betragen.

9. Beschichtung nach Anspruch 3, bei der das besagte Gewebe zumindest zwei langgestreckte Elemente (32, 33) aufweist, die sich parallel über dieselbe Ebene des besagten Gewebes erstrecken, um die Trägerfläche des besagten Gewebes zu erhöhen, oder aber überlagert, um die Dicke des besagten Gewebes zu erhöhen.

10. Beschichtung nach einem der Ansprüche 1 bis 9, bei der das Gewebe (6) die Form eines Bandes aufweist, und die besagten Trägerfäden (3) orthogonal zur Längsachse des besagten Bandes ausgerichtet sind.

11. Beschichtung nach einem der Ansprüche 1 bis 9, bei der das Gewebe (6) die Form eines Bandes aufweist, und die besagten Trägerfäden (3) parallel zur Längsachse des besagten Bandes ausgerichtet sind.

12. Verfahren, bei dem man zumindest eine Operation an heißem Glas vornimmt, und bei dem das heiße Glas auf einem Träger (1) aufliegt, und bei dem man eine Beschichtung (2) nach irgendeinem der Ansprüche 1 bis 11 einlegt, die im Wesentlichen aus thermostabilen Fasern zwischen dem Träger (1) und dem besagten heißen Glas (V) gebildet wird, wobei die besagte Operation eine Bewegung jeweils zwischen dem heißen Glas (V) und der Beschichtung mit den besagten Trägerfäden (3) hervorrufen kann, und bei dem man bei Ausführung der besagten Operation die Richtungen der besagten Trägerfäden (3) lokal in die Bewegungsrichtung (D) des Glases im Verhältnis zur besagten Beschichtung (2) orientiert.

13. Verfahren nach Anspruch 12, bei dem die besagte Operation ein Umform- und / oder Abschreckvorgang des heißen Glases ist, bei der der Träger (1) ein Rahmen ist, der durch Längsträger (4) und Querträger (5) gebildet wird, und bei dem man die besagten Trägerfäden (3) der besagten Beschichtung orthogonal zu den Längsträgern (4) und Querträgern (5) des besagten Trägerrahmens orientiert.

14. Verfahren nach Anspruch 12, bei dem die besagte Operation ein Transportvorgang des heißen Glases durch eine Förderanlage ist, wobei der Träger von der besagten Förderanlage gebildet wird, und bei dem man die besagten Trägerfäden (3) der besagten Beschichtung in die Fahrtrichtung der besagten Förderanlage orientiert.

15. Verfahren nach Anspruch 13, bei dem das besagte Gewebe (6) die Form eines Bandes aufweist, das sich entlang der Längsträger (4) und Querträger (5) des besagten Trägerrahmens (1) erstreckt, wobei die besagten Trägerfäden (3) orthogonal zur Längsachse des besagten Bandes orientiert sind, und bei dem die besagten Trägerfäden (3) durch das besagte zumindest eine durchgehende langgestreckte Element (30; 31; 32; 33) gebildet werden, das sich periodisch nach der besagten zweiten Richtung (d2) in die erste Richtung (d1) erstreckt, um die besagten Trägerfäden (3) zu bilden, und bei der die besagten sukzessiven und durch dasselbe langgestreckte Element (30; 31; 32; 33) gebildeten Trägerfäden (3) im Bereich von zwei Rändern (9, 10) des Gewebes (6) durch Biegungen (11) des besagten langgestreckten Elements (30; 31; 32; 33) angrenzend sind, und das besagte Gewebeband (6) gespannt auf dem Trägerrahmen (1) befestigt wird, indem man die besagten Biegungen (11) an Klauen (12) des besagten Rahmens festhakt, die von der oberen Auflagefläche des besagten Rahmens zurückversetzt entlang der Längsträger (4) und Querträger (5) des Trägerrahmens (1) angeordnet sind.

## Claims

1. Temperature-resistant coating (2) intended to be interposed between a support (1) and hot glass (V) constituted substantially of a fabric (6) of heat-stable fibres, having lines of support, said lines of support (3) extend parallel to each other, at least over a central portion of the fabric (6) intended to support the glass, according to a first direction (d1) of said fabric, linking threads (7) of said fabric, oriented in particular orthogonally to said lines of support (3), according to a second direction (d2), providing the linkage and the maintaining of said lines of support (3) between them, **characterised in that** said lines of support (3) are constituted either by several elongated components different from the fabric, or by at least one continuous elongated component (30; 31; 32, 33) of said fabric (6) extending periodically according to said second direction (d2), according to said first direction (d1) in order to constitute said lines of support (3), the diameter of the lines of support (3) being greater than the diameter of the linking threads (7) between 2 times and 50 times the diameter of the linking threads (7), said linking threads (7) being located set back with respect to the surface of the fabric intended to be in contact with the glass in such a way as to not constitute lines of contact for the glass.

2. Coating according to claim 1, wherein the diameter of the lines of support (3) is greater than the diameter of the linking threads (7), between 5 times and 50 times the diameter of the linking threads (7).

3. Coating according to claim 1 or 2, wherein said lines of support (3) are constituted by said at least one continuous elongated component (30; 31; 32, 33) of said fabric (6) extending periodically according to said second direction (d2), according to the first direction (d1) in order to constitute said lines of support (3) and wherein said successive lines of support formed by the same elongated component (30; 31; 32, 33) are adjoined on two edges (9, 10) of the fabric (6) via elbows (11) of said elongated component.

4. Coating according to one of claims 1 to 3, wherein said or each elongated component is a roving of threads (31; 32, 33).

5. Coating according to one of claims 1 to 3, wherein said or each elongated component is an elastic tricot (30) such as for example tubular mesh providing the fabric with elasticity according to said a first direction (d1) of said fabric (6).

6. Coating according to one of claims 1 to 3, wherein said or each elongated component is a braid of threads.

7. Coating according to one of claims 1 to 3, wherein said or each elongated component is a cable or a strand.

8. Coating according to one of claims 1 to 7, wherein the fabric has rectangular holes (8) between the warp threads (7) and said lines of support (3) of which the dimensions of the sides are between 1 mm and 50 mm, and more preferably between 10 and 30 mm.

9. Coating according to claim 3, wherein said fabric has at least two elongated components (32, 33) extending parallel in the same plane of said fabric in order to increase the surface of the support of said fabric, or in a stacked manner, in order to increase the thickness of said fabric.

10. Coating according to one of claims 1 to 9, wherein the fabric (6) is present in the form of a strip, said lines of support (3) oriented orthogonally to the longitudinal axis of said strip.

11. Coating according to one of claims 1 to 9, wherein the fabric (6) is present in the form of a strip, said lines of support (3) oriented parallel to the longitudinal axis of said strip.

12. Method wherein at least one operation is carried out on hot glass, and wherein the hot glass rests on a support (1), and wherein a coating (2) is interposed according to any one of claims 1 to 11, constituted substantially of heat-stable fibres, between the support (1) and said hot glass (V), said operation able to provoke a relative displacement between the hot glass (V), with the coating having said lines of support (3), and wherein the directions of said lines of support (3) are oriented, locally, according to the direction of displacement (D) of the glass with respect to said coating (2) during the carrying out said operation.

13. Method according to claim 12, wherein said operation is an operation of forming and/or tempering of the hot glass, wherein the support (1) is a frame formed of longitudinal beams (4) and of crossbeams (5), and wherein said lines of support (3) of said coating are oriented orthogonally to the longitudinal beams (4) and to the crossbeams (5) of said support frame.

14. Method according to claim 12, wherein said operation is an operation of transporting the hot glass via a conveyor, with the support being constituted by said conveyor, and wherein said lines of support (3) of said coating are oriented according to the direction of displacement of said conveyor.

15. Method according to claim 13 wherein said fabric (6) is present in the form of a strip extending along longitudinal beams (4) and crossbeams (5) of said support frame (1), said lines of support (3) oriented orthogonally to the longitudinal axis of said strip, and wherein said lines of support (3) are constituted by said at least one continuous elongated component (30;31;32,33) extending periodically according to said second direction (d2), according to the first direction (d1) in order to constitute said lines of support (3), said successive lines of support (3) belonging to the same elongated component (30; 31; 32, 33) being adjoined, on two edges (9, 10) of the fabric (6), via elbows (11) of said elongated component (30; 31; 32, 33), said strip (6) of fabric being fixed tightly on the support frame (1) by crocheting said elbows (11) on pins (12) of said frame positioned along longitudinal beams (4) and crossbeams(5) of the support frame (1), set back from the upper support surface of said frame.
